(19) Europäisches Patentamt
European Patent Office
Office européen des brevets

(11) EP 3 130 843 A1

(12) EUROPÄISCHE PATENTANMELDUNG

(43) Veröffentlichungstag:
**15.02.2017 Patentblatt 2017/07**

(51) Int Cl.:
***F21V 8/00*** *(2006.01)*

(21) Anmeldenummer: **16401042.3**

(22) Anmeldetag: **14.07.2016**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(30) Priorität: **13.08.2015 DE 102015113342**

(71) Anmelder: **Karlsruher Institut für Technologie
76131 Karlsruhe (DE)**

(72) Erfinder:
- **Neumann, Cornelius
76139 Karlsruhe (DE)**
- **Bonenberger, Theresa
88239 Wangen i. A. (DE)**

(54) **VORRICHTUNG ZUM MISCHEN UND LEITEN ELEKTROMAGNETISCHER STRAHLUNG**

(57) Vorrichtung (100, 200, 300, 400, 500, 600 und 700) zum Mischen und Leiten von elektromagnetischer Strahlung, gebildet mittels eines geometrischen Körpers, der mittels mindestens einem zumindest teilweise gegenüber einem zuvor definierten Spektralbereich elektromagnetischer Strahlung transparenten und/oder transluzenten Materials gebildet ist, wobei der Körper aufweist: eine Eintrittsfläche und eine Austrittsfläche, die jeweils distal des Körpers angeordnet sind; wobei zumindest die Eintritts- und/oder die Austrittsfläche die Grundfläche des Körpers bildet; mindestens eine, den Körper seitlich zumindest teilweise umlaufende äußere Mantelfläche, wobei die äußere Mantelfläche mindestens zwei Mantelflächensegmente aufweist und wobei sich die äußere Mantelfläche zwischen Eintritts- und Austrittsfläche erstreckt; wobei die Eintritts- und Austrittsfläche, sowie die äußere Mantelfläche den Körper zumindest teilweise umgeben; und wobei ferner die Eintritts- und die Austrittsfläche derart eingerichtet sind, dass mittels der Eintrittsfläche, der zuvor definierte Spektralbereich elektromagnetischer Strahlung, in den Körper eingekoppelt wird; und mittels der Austrittsfläche zumindest ein Teil des zuvor eingekoppelten Spektralbereichs elektromagnetischer Strahlung aus dem Körper austritt; wobei der Körper dadurch gekennzeichnet ist, dass mindestens ein Mantelflächensegment zumindest teilweise gekrümmt und semidispersiv, dispersiv oder defokussierend gebildet ist; und wobei mindestens ein Querschnitt des Körpers, abseits der Eintritts- und Austrittsfläche, gemäß einer zweidimensionalen Grundflächengeometrie mindestens eines Billardsystems mit hyperbolischer Dynamik gebildet ist.

FIG. 1

100

110

120

130

140

EP 3 130 843 A1

## Beschreibung

Die Erfindung betrifft eine Vorrichtung zum Mischen und Leiten von elektromagnetischer Strahlung.

Bisherige Lösungen haben die Problematik erkannt, dass eine Farbmischung mit einem herkömmlichen Standard-Lichtleiter im Fernfeld nicht möglich ist. Die aus dem Stand der Technik bekannten Lösungen verursachen jedoch Veränderungen in der Abstrahlcharakteristik und verringern signifikant den Wirkungsgrad bei der Lichtabgabe. In der Nicht-Patentliteratur finden sich Lösungen, die bspw. einen Einsatz von kleinen Streupartikeln im Lichtleiter [Deller, C.; Smith, G.; & Franklin, J.; (2004): "Colour mixing LEDs with short microsphere doped acrylic rods.", Opt. Express 12.] vorschlagen oder eine Streuscheibe am Lichtaustritt [Cassarly, W. J.; (2008): "Recent Advances in Mixing Rods.", Proc. of SPIE Vol. 7103, Illumination Optics.]. Ähnliche bzw. weitere Lösungen finden sich in der Patentliteratur, wie z.B. in WO 2013/ 114259 A1 offenbart, wobei hierbei die bewusste Ausformung des Lichtleiterquerschnitts, wobei hierin lediglich eine im Wesentlichen sechseckige Ausformung eingesetzt wird. Zudem ist bei der zuvor genannten Lösung die Güte der Farbmischung abhängig von der Position der Lichteinkopplung. In der Druckschrift US 2007/0024971 A1 ist offenbart, dass bspw. gewellte bzw. gezackte Lichtleiterquerschnitte zur Farbmischung auf weite Entfernungen Verwendung finden.

Grundsätzlich ist es Stand der Technik die Oberfläche von Lichtleitern zu modifizieren. Allerdings zielt die vorliegende Erfindung auf eine spezielle Klasse von Querschnitten ab, nämlich solche, welche klassisch Billardsystemen mit hyperbolischer Dynamik bzw. sogenannten chaotischen Billards entsprechen. Diese sind bislang nicht im Stand der Technik dokumentiert, insbesondere nicht die geschilderte bevorzugten Ausführungsformen. Erfindungsgemäß mischen diese "chaotischen" Formen von Lichtleitern die Farben effizienter und auf kürzeren Strecken als die vorbekannten technischen Lösungen, wobei hierbei mit "chaotischen" Formen die Klasse von Formen verstanden wird, die auf Billardsystemen mit hyperbolischer Dynamik bzw. chaotischem Billard basieren. Die Definition eines Billardsystems mit hyperbolischer Dynamik bzw. chaotischen Billards ist die Nichtvorhersehbarkeit der Entwicklung und Bewegung einer Trajektorie/eines Lichtstrahls, da die Bewegung unendlich sensitiv auf eine Variation der Startbedingungen (Startpunkt und Startwinkel) reagiert. Bekannt ist auch das Analogon aus der Wetterentwicklung, der sogenannte "Schmetterlingseffekt". Gerade weil die Lichtstrahlen nicht von einem Punkt aus, sondern von einer ausgedehnten Chipoberfläche starten, wirkt sich dieses Verhalten besonders positiv auf die Mischung aus. Bisherige Lösungen fassen implizit die Lichtquelle immer als "Punkt" auf, welche leider durch die Ausdehnung des Chips "verwaschen" ist. Jedoch wird erfindungsgemäß die Ausdehnung des Chips gerade als notwendige Eigenschaft genutzt, damit das Mischprinzip über beanspruchten Ausführungsformen von Vorrichtungen zum Leiten und Mischen von elektromagnetischer Strahlung funktioniert.

Die Offenlegungsschrift DE 10 2011 086 915 A1 offenbart eine Einkopplung von stark unterschiedlicher Lichtquellen. Die Querschnittsgeometrie des Lichtleiters entspricht hierbei jedoch keinem Billardsystem mit hyperbolischer Dynamik bzw. chaotischem Billard chaotischen Billard.

DE 10 2013 212 906 A1 offenbart eine Vorrichtung mit einer Krümmung, wobei sich diese aber in Längsrichtung erstreckt. Auch diese zusätzlichen "Riffel" im Querschnitt entsprechen keinem Billardsystem mit hyperbolischer Dynamik bzw. chaotischem Billard chaotischen Billard.

Die Patentschrift EP 2 039 987 B1 offenbart gemäß den Zeichnungen einen "Hohllichtleiter". Auch hier ist die Querschnittsgeometrie nicht einem Billardsystem mit hyperbolischer Dynamik bzw. chaotischem Billard entsprechend.

In WO 2012/176117 A1 ist eine reflektive Mischanordnung offenbart, kein Lichtleitstab. Die Mischung ist auf zwei Reflexionskomponenten verteilt und entspricht schon daher nicht dem erfinderischen Grundgedanken der vorliegenden Erfindungsmeldung.

Die Abgrenzung zu dem hierin genannten Stand der Technik von der beanspruchten Vorrichtung stellt darauf ab, dass in allen diesen Schriften keinerlei Hinweis darauf zu finden ist, das die offenbarten Querschnittsfläche der beschriebenen Farbmischsysteme auf einer Form von Billardsystemen mit hyperbolischer Dynamik bzw. chaotischer Billards basieren.

Somit besteht die Aufgabe darin, eine Vorrichtung bereitzustellen die eine Farbmischung auf größere Entfernung bei gleichzeitig hoher Effizienz ermöglicht.

Die Aufgabe wird mit einer Vorrichtung gemäß den Merkmalen von Patentanspruch 1 gelöst. Hierauf bezogene Unteransprüche geben vorteilhafte Ausgestaltungen wieder.

Der zuvor genannte Stand der Technik vermag jedoch nicht die oben besprochene Problematik von Farbmischung auf größere Distanz bzw. Entfernung einer Projektion des aus dem Lichtleiter ausstrahlenden Lichtstrahls bei hoher Effizienz lösen. Durch die Verwendung der Geometrien von Billardsystemen mit hyperbolischer Dynamik bzw. chaotischer Billards wird jedoch eine sehr gute Farbmischung auf größere Distanz generiert, da hierdurch eine starke Sensitivität auf die Anfangsbedingungen gegeben ist. Die Durchmischung erfolgt bei den Lichtleitern, deren Querschnittsgeometrie auf Billardsystemen mit hyperbolischer Dynamik bzw. chaotischer Billards basieren, viel schneller im Vergleich zu bisher bekannten Lichtleitern. Das heißt die Länge bzw. Baulänge der erfindungsgemäßen Vorrichtung verkürzt sich. Zudem ist die Güte der Farbmischung unabhängig von der Einkoppelposition, d.h. die Montage von Lichtleiter und Lichtquelle ist unempfindlich gegenüber Dezentrierungstoleranzen. Die hohe Effizienz bleibt gewährleistet, da das Prinzip der Totalreflexion auch bei Lichtleitern, deren Querschnittsgeometrie auf Billardsystemen mit hyperbolischer Dynamik bzw. chaotischer Billards basieren, erhalten bleibt und keine zusätzlichen Streuscheiben verwendet werden müssen.

Die Erfindung betrifft bspw. auch die Farbmischtechnik von lichtemittierenden Dioden (LED). Dabei wird das Licht von roten, grünen und blauen, sowie teilweise zusätzlichen weißen LEDs miteinander vermischt um verschiedene Farbtöne zu erzeugen. Problematisch ist hierbei die vollständige und räumlich konstante Mischung des Lichtes, da die bisherigen Mischtechniken nicht gewährleisten können, dass sich das Licht aus den verschiedenen LED Lichtquellen nicht partiell wieder entmischt. Dadurch entstehen störende Farbschatten und -Ränder, welche die Einsatzfähigkeit von Farbmischung deutlich einschränkt. Eine gute, räumlich konstante Farbmischung ist bislang nur auf Kosten der Effizienz möglich (z.B.: Einsatz dichroitischer Filter). Als sehr effizient haben sich Farbmischstäbe erwiesen, welche durch Vielfachreflexion innerhalb eines gestreckten Lichtleiters das Licht der verschiedenen LEDs verwirbeln. Allerdings sind momentan auf dem Markt befindliche Lichtleiter nicht in der Lage einen Lichtaustritt zu schaffen, welcher auf große Distanzen farbhomogen ist. Die Querschnittsgeometrie von stabförmigen Lichtleiternwird durch die Reflexionen der verschiedenen Lichtquellen in ein kaleidoskopartiges Muster übertragen. Je länger der Lichtleitstab, umso kleiner werden die kaleidoskopartigen Abbildungen. Damit wird am Lichtaustritt zwar eine sehr gute Farbmischung für das menschliche Auge erzeugt, auf Grund der sich räumlich entfernenden Lichtstrahlen, werden die einzelnen Kaleidoskopelemente mit zunehmendem Abstand immer größer, so dass sich die Farben auf größere Entfernungen wieder entmischen. In neueren Anwendungen (siehe Stand der Technik) wird versucht, diesen Effekt bspw. durch eine "Riffelung" der Stabaußenfläche zu minimieren, was aber nur eingeschränkt gelingt. Bislang wird dieses Problem durch eine zusätzliche - den Wirkungsgrad herabsenkende - Streuscheibe am Lichtaustritt gelöst.

Neu ist die Anwendung der Geometrien von Billardsystemen mit hyperbolischer Dynamik bzw. chaotischer Billards, wobei diese beiden Begriffe weiter unten noch detailliert beschrieben werden, auf den Querschnitt von Farbmischstäben. Hierbei ist anzumerken, dass der Begriff chaotische Billards sich hierbei lediglich auf die Sensitivität dieser Systeme auf die Anfangsbedingung abstellt. Diese Billardsysteme mit hyperbolischer Dynamik bzw. chaotischen Billardsysteme lassen sich bspw. über den sogenannten Lyapunov-Exponent charakterisieren. Ist dieser größer Null handelt es sich um ein chaotisches System. Das bedeutet die Querschnittsfläche der erfindungsgemäßen Farbmischstäbe hat in zumindest einer Dimension einen Lyapunov-Exponent größer Null.

Die beiden Begriffe, Billardsystem mit hyperbolischer Dynamik bzw. chaotischer Billard, werden hierin synonym verwendet und bezeichnen eine definierte Klasse von Formen. Die dementsprechende Klasse wird in der folgenden Beschreibung noch detailliert beschrieben.

Die meisten Vorteile sind bereits weiter oben aufgeführt, wobei sie hier an dieser Stelle nochmals zusammengefasst sind: Die erfindungsgemäße Vorrichtung kann eine verbesserte Farbmischung, auch im Fernfeld bereitstellen; sie verursacht keine Veränderung bei den Abstrahleigenschaften der eingekoppelten Lichtquellen; sie weist gegenüber dem Stand der Technik eine gesteigerte Effizienz der Lichtleitung auf, da hierbei die Lichtleitung vollständig erhalten bleibt, wobei lediglich Fresnel-Verluste an Ein- und Auskoppelfläche entstehen können; es können geringe Baulängen erzielt werden, die im Vergleich zu bisher bekannten Farbmischstäben unempfindlich gegenüber Dezentrierung von Lichtquelle zu Lichtleiter sind; und die beanspruchte Vorrichtung kann mit geringem technischen Aufwand hergestellt werden.

Die Erfindung nutzt besondere Querschnittsgeometrien, welche sich an die Klasse chaotischer Systeme anlehnt. In der Literatur werden solche Querschnitte als sogenannte Billardsysteme mit hyperbolischer Dynamik bzw. chaotische Billardsysteme zusammengefasst, und sind eine Unterklasse der mathematischen Billards. Bei diesen zweidimensionalen Systemen werden Bewegungstrajektorien (bspw. Lichtstrahlen) so an den Seitenflächen reflektiert, dass die Bewegung über einen längeren Zeitraum nicht mehr örtlich vorhersagbar ist, da die Startbedingungen dieser Trajektorien exakt bekannt sein müssten. Eine infinitesimal geringe Abweichung von einem Startpunkt führt zu einer völlig anderen Entwicklung der Bahn bzw. Bewegungstrajektorien (bspw. Lichtstrahlen). Dies bezeichnet man als deterministisches Chaos. Die erfinderische Idee besteht nun darin, diese Querschnittsgeometrien in die dritte Dimension zu extrudieren und damit einen stabförmigen Lichtleiter zu schaffen. Dadurch, dass die verwendeten LED Lichtquellen eben nicht punktförmig sind, sondern eine Ausdehnung haben, starten die von den LEDs ausgesandten Lichtstrahlen in von verschiedenen Punkten der Fläche aus und erfüllen damit die Bedingung abweichender Startpunkte. Bei den Vielfachreflexionen innerhalb des Stabes wird daher die Sensitivität von den Startbedingungen zu einem chaotischen Vermischen der Lichtstrahlen führen, so dass ein Kaleidoskopeffekt nicht mehr auftritt. Aus diesem Grunde können die erfindungsmäßig gestalteten Lichtmischstäbe auch auf größerem Abstand eine hervorragende Mischung garantieren, ohne jegliche Einbußen an Effizienz. Eine besonders wirksame Querschnittsgeometrie stellt im Sinne dieser Erfindung ein Billiardstem dar, welches beginnend mit einer quadratischen Fläche die Seitenfächen in den Lichtleiter hinein zieht, so dass daraus dispersive Seitenflächen entstehen.

Eine Ausführungsform weist eine Vorrichtung zum Mischen und Leiten von elektromagnetischer Strahlung auf und wird mittels eines geometrischen Körpers gebildet, der mittels mindestens einem zumindest teilweise gegenüber einem zuvor definierten Spektralbereich elektromagnetischer Strahlung transparenten und/oder transluzenten Materials gebildet ist, wobei der Körper aufweist: eine Eintrittsfläche und eine Austrittsfläche, die jeweils distal des Körpers angeordnet sind, d.h. von der Körpermitte weg bzw. an beiden Enden des Körpers; wobei zumindest die Eintritts- und/oder die Austrittsfläche die Grundfläche des Körpers bildet; mindestens eine, den Körper seitlich zumindest teilweise umlaufende äußere Mantelfläche, wobei die äußere Mantelfläche mindestens zwei Mantelflächensegmente aufweist und wobei sich die äußere Mantelfläche zwischen Eintritts- und Austrittsfläche erstreckt; wobei die Eintritts- und Austrittsfläche, sowie die äußere Mantelfläche den Körper zumindest teilweise umgeben; und wobei ferner die Eintritts- und die Austrittsfläche derart eingerichtet sind, dass mittels der Eintrittsfläche, der zuvor definierte Spektralbereich elektromagnetischer Strahlung, in den Körper eingekoppelt wird; und mittels der Austrittsfläche zumindest ein Teil des zuvor eingekoppelten Spektralbereichs elektromagnetischer Strahlung aus dem Körper austritt; wobei der Körper dadurch gekennzeichnet ist, dass mindestens ein Mantelflächensegment zumindest teilweise gekrümmt und semi-dispersiv, dispersiv oder defokussierend gebildet ist; und wobei mindestens ein Querschnitt des Körpers, abseits der Eintritts- und Austrittsfläche, gemäß einer zweidimensionalen Grundflächengeometrie mindestens eines Billardsystems mit hyperbolischer Dynamik bzw. chaotischem Billard gebildet ist. Ein Farbmischsystem im Nah- und Fernfeld z.B. für LED-Lichtquellen, umfassend alle LED Lichtquellen wie bspw. ultraviolett, rot, grün, blau, amber, etc. und jede weiße LED, auf Basis von Lichtleitstäben deren über der Länge konstante Querschnittfläche dadurch gekennzeichnet ist, dass die für die Reflektion genutzten Komponenten dispersiv, d.h. im allgemeinen Sinn zerstreuend und hier noch insbesondere, dass jeder Punkt der Ränder nach innen gewölbt ist, sind. Durch die dispersiven Mantelflächen des Lichtleiters entsteht eine starke Sensitivität des Systems auf die Anfangsbedingungen. Querschnittsflächen, deren Ränder reflektieren, werden in der Mathematik als Billardsysteme bezeichnet. Die Grundidee basiert auf Billardsystemen mit hyperbolischer Dynamik bzw. chaotischen Billards, welche eine starke Sensitivität auf die Anfangsbedingungen zeigen. Billardsysteme mit hyperbolischer Dynamik bzw. chaotische Billards lassen sich wiederum unterteilen in dispersive und semi-dispersive und defokussierende Billardsysteme. Bei beiden zweidimensionalen Systemen werden Bewegungstrajektorien (beispielsweise Lichtstrahlen) so an den Seitenflächen reflektiert, dass die Bewegung über einen längeren Zeitraum nicht mehr örtlich vorhersagbar ist, da die Startbedingungen dieser Trajektorien exakt bekannt sein müssten. Eine infinitesimal geringe Abweichung von einem Startpunkt führt zu einer völlig anderen Entwicklung der Bahn. Dies bezeichnet man als deterministisches Chaos. Bei dispersiven Billardsystemen verlaufen die Trajektorien komplett chaotisch, d.h. wenn zwei Trajektorien sich infinitesimal in den Anfangsbedingungen unterscheiden, entfernen sie nach wenigen Reflexionen exponentiell voneinander. Die ersten Beispiele für dispersive Billardsysteme, stammen von Ya G. Sinai (siehe weiter unten [3]). Dispersive Billardsysteme sind dadurch gekennzeichnet, dass alle Komponenten streng nach innen konvex sind. Vorteilhaft hierbei ist, dass die verwendeten LED Lichtquellen eben nicht punktförmig sind, sondern eine Ausdehnung haben und dadurch starten bzw. breiten sich die von den LEDs ausgesandten Lichtstrahlen in von verschiedenen Punkten der Fläche aus und erfüllen damit die Bedingung abweichender Startpunkte. Bei den Vielfachreflexionen innerhalb des Stabes wird daher die Sensitivität von den Startbedingungen zu einem schnellen Vermischen der Lichtstrahlen führen. Da die Lichtleitung jedoch erhalten bleibt, entstehen lediglich die Fresnel-Verluste an der Ein- und Auskoppelfläche und die Abstrahleigenschaften der eingekoppelten Lichtquelle werden erhalten. Zudem ist die Güte der Farbmischung unabhängig von der Einkoppelposition, das heißt die Montage von Lichtleiter und Lichtquelle ist unempfindlich gegenüber Dezentrierungstoleranzen.

In einer weiteren Ausführungsform weist der Querschnitt des Körpers zumindest eine geometrische Form aus der Gruppe geometrischer Formen von Billardsystemen mit hyperbolischer Dynamik bzw. chaotischem Billard auf, wobei die Gruppe aufweist: Sinai, Bunimovich oder/und Pilz Billard.

In einer weiteren Ausführungsform ist zumindest ein Mantelflächensegment derart gekrümmt und dispersiv gebildet ist, dass das Mantelflächensegment hin zur Körpermitte des Körpers konvex gebildet.

In einer weiteren Ausführungsform sind alle Mantelflächensegmente derart gekrümmt und dispersiv gebildet, dass die Mantelflächensegmente hin zur Körpermitte des Körpers konvex gebildet sind.

Demgemäß weist zumindest in einer Ausführungsform der Lichtleiterstab einen Querschnitt aus vier nach innen konvexen Rändern auf. Die sphärischen Ränder haben in diesem Fall alle denselben Radius. Der Radius ist so gering wie möglich gewählt, entsprechend der Länge der Querschnittsdiagonale aller eingekoppelten LEDs. Aus der Literatur ist diese Querschnittsfläche auch als Sinai-Billard bekannt. Es handelt sich hierbei um ein dispersives Billardsystem. Ein paralleles bzw. kollimiertes Lichtbündel wird bei Reflektion gestreut. Die Vorteile liegen dabei in einer sehr schnellen Durchmischung, das heißt der Lichtleiterstab muss nur eine geringe Länge haben, d.h. ungefähr das zehnfache der Querschnittsdiagonale um eine vollständige Durchmischung im Fernfeld zu erzeugen. Des Weiteren ist diese Querschnittsgeometrie mit geringem technischem Aufwand herstellbar.

In einer weiteren Ausführungsform ist zumindest ein Mantelflächensegment derart gekrümmt und semi-dispersiv gebildet, dass das Mantelflächensegment hin zur Körpermitte des Körpers konvex oder konkav gebildet ist.

In einer weiteren Ausführungsform ist zumindest ein Mantelflächensegment derart gekrümmt und defokussierend gebildet, dass das Mantelflächensegment hin zur Körpermitte des Körpers konkav und/oder gerade gebildet ist.

Demgemäß ist ein Farbmischsystem für LED-Lichtquellen auf Basis von Lichtleitstäben deren über der Länge konstante Querschnittfläche dadurch gekennzeichnet, dass die für die Reflexion genutzten Ränder zumindest semi-dispersiv sind. Bei semi-dispersiven Billardsystemen verlaufen die Trajektorien teilweise chaotisch und teilweise regelmäßig. Semi-dispersive Billardsysteme sind dadurch gekennzeichnet, dass sie gerade Komponenten beinhalten und nach innen oder außen konvexe Komponenten. Die Vorteile sind hierbei gleich denen wie bei dispersiven Systemen, jedoch wird ein längerer Lichtleitstab benötigt, da hierbei die Lichtstrahlen durch die teilweise regelmäßigen Reflektionen nicht so schnell gemischt werden, wie bei dispersiven Querschnittsflächen. Ähnliches gilt ebenso für defokussierende Systeme.

In einer weiteren Ausführungsform ist der gesamte Körper aus mindestens einem optisch transparenten Kunststoff oder Glas gebildet, wobei der gesamte Körper aus mindestens einem optisch transparenten oder transluzenten Material aus der Gruppe von optisch transparenten oder transluzenten Materialien gebildet ist, wobei die Gruppe aufweist: Glas, Polycarbonat (PC), Polymethacrylmethylimid (PMMI), Silikon und/oder Polymethymethacrylat (PMMA). Für Lichtleiterstäbe muss zumindest ein Material verwendet werden, welches entweder die Totalreflektion erhält oder das Licht durch Reflektion leitet. Bspw. erhalten Glas, PC und PMMA die Totalreflektion, wodurch das Licht verlustlos weitergeleitet wird.

In einer weiteren Ausführungsform ist der Körper zumindest mit mindestens einem Hohlraum innerhalb des Körpers gebildet, wobei der Hohlraum derart gebildet ist, dass der Körper mindestens eine, den Körper zumindest teilweise innerhalb, umlaufende innere Mantelfläche aufweist und wobei die innere Mantelfläche mindestens ein Mantelflächensegment aufweist, wobei sich die innere Mantelfläche zumindest teilweise zwischen Eintritts- und Austrittsfläche erstreckt und wobei die innere Mantelfläche derart eingerichtet ist, dass die innere Mantelfläche die, aus dem Körper auftreffende elektromagnetische Strahlung in den Körper zurück reflektiert.

In einer weiteren Ausführungsform berührt die innere Mantelfläche die Eintritts- und Austrittsfläche, demgemäß erstreckt sich der Hohlraum im inneren der Vorrichtung in dieser Ausführungsform bspw. durch die gesamte Vorrichtung hindurch, wodurch beispielweise die Durchmischung in Verbindung mit der Form der äußeren Mantelfläche gesteigert und auch der Materialaufwand beim Herstellen verringert werden kann.

In einer weiteren Ausführungsform weist ein Querschnitt des Hohlraums eine kreisförmige oder elliptische Form auf. Ein solcher Lichtleiterstab kann ein Hohllichtleiter sein mit nach innen reflektierenden Flächen, was wiederum vorteilhaft für die interne Totalreflektion ist. Je nach Anwendung kann auch ein Hohllichtleiter verwendet werden, insbesondere wenn die Lichtleitung mit Absorptionsverlusten bei jeder Reflektion behaftet ist.

In einer weiteren Ausführungsform weist der Körper entlang seiner äußeren und/oder inneren Mantelfläche mindestens eine Krümmung auf. Demgemäß weist bspw. ein gekrümmter Lichtleitstab dessen Krümmung wiederum verschiedenste Ausführungsformen auf. Zur Vermeidung des Anteils des direkten Lichts, d.h. Licht welches die LED in einem so schmalen Abstrahlwinkel emittiert, dass es den Lichtleiter ohne Reflektion durchläuft, kann der Lichtleitstab gekrümmt werden. Vorteilhaft ist hierbei, dass indem auch das Licht mit schmalem Abstrahlwinkel der LEDs reflektiert wird, findet eine vollständige Durchmischung statt.

In einer weiteren Ausführungsform ist angrenzend oder benachbart zur Eintritts- und/oder Austrittsfläche eine Optik angeordnet. Demgemäß ist in dieser Ausführungsform bspw. eine Optik an der Eintrittsfläche eines Lichtleitstabs angebracht oder integriert. Zur Vermeidung des Anteils des direkten Lichts, d.h. Licht, welches die LED in einem so schmalen Abstrahlwinkel emittiert, dass es den Lichtleiter ohne Reflektion durchläuft, kann eine Optik an der Lichtleitereintrittsfläche entsprechend gestaltet werden. Vorteilhaft ist hierbei, dass indem auch das Licht mit schmalem Abstrahlwinkel der LEDs reflektiert wird, findet eine vollständige Durchmischung statt.

In einer weiteren Ausführungsform ist die Austrittsfläche derart eingerichtet, dass die Vorrichtung als Primärlichtquelle für zusätzliche optische Systeme fungiert. Hierbei kann die Diagonale des Lichtleiterquerschnitts bspw. so groß gewählt werden, wie die Diagonale aller eingekoppelten LEDs. Dadurch ist bspw. die Austrittsfläche eine Fläche mit der Größe der Diagonale aller eingekoppelten LEDs die ideal durchmischtes Licht enthält, d.h. es sind keine unterscheidbaren Farben mehr sichtbar. Da die Abstrahleigenschaften der LEDs dabei erhalten werden, kann die Austrittsfläche wie eine Lichtquelle behandelt werden. Vorteile ergeben sich bspw. durch Erzeugen einer ideal durchmischten "virtuellen" LED, wodurch hierfür verschiedenste Optiken verwendet werden können, wie z.B. beliebige Linsen bzw. Linsensysteme, z.B. fokussierend oder defokussierend, Reflektoren, Kollimatoren, etc.

In einer weiteren Ausführungsform verändert sich die Flächengröße des Querschnitts entlang des Körpers kontinuierlich oder diskontinuierlich verändert. D.h. die Querschnittsdiagonale kann sich über der Länge des Lichtleitstabs vergrößert bzw. verringern. In machen Anwendungen werden zur Farbmischung bisher sogenannte "tapered mixing rods" also kegelförmige Lichtleiter verwendet, da ein kleinerer Abstrahlwinkel benötigt wird. Durch die Vergrößerung der Querschnittsdiagonale und damit die Vergrößerung der Lichtleiteraustrittsfläche gegenüber der Lichtleitereintrittsfläche wird der eingekoppelte Winkel verkleinert. Verlustfreie und farbmischende Transformation eines großen Abstrahlwinkel zu einem kleineren Abstrahlwinkel.

In einer weiteren Ausführungsform leitet und mischt die Vorrichtung mindestens teilweise elektromagnetische Strahlung mindestens einer lichtemittierenden oder strahlungsemittierenden Diode (LED), wobei die LED mindestens eine aus der Gruppe von LED aufweist, wobei die Gruppe aufweist: UV-LED, IR-LED, organische LED, RGB-LED, alle LED die sichtbares Licht emittieren, LED die blaues Licht emittieren, LED mit Leuchtstoffbeschichtung oder Leuchtstoffummantelung (Packaged LED). Das Farbmischsystem umfasst somit auch die Mischung aller LED-Lichtquellen, wie bspw. UV emittierende, alle sichtbaren Wellenlängen emittierend und blaue LEDs mit verschiedensten Phosphorschichten bzw. -ummantelungen bzw. -packages. Farbmischung findet hierbei in den verschiedensten Bereichen statt. Für therapeutische Anwendung kann bspw. zusätzlich zu RGB-LEDs eine UV-LED verwendet werden.Vorteilhaft ist dabei, dass sich jede beliebige Farbe und auch jede weiße LEDs mit dem Farbmischsystem mischen lässt.

In einer weiteren Ausführungsform ist die Vorrichtung derart eingerichtet, dass einzelne LED und/oder Mulitchip-LED eingesetzt sind. Unter Multichip-LEDs sind hierin besonders dicht angeordnet LED-Chips oder einzelnen LEDs wie bspw. LED-Arrays zu verstehen. Je nach Anwendung sind dabei auch unterschiedliche LEDs erforderlich bzw. möglich. Jede Strahlung einer beliebigen LED kann mit beliebiger Anordnung unter Anpassung der Größe der Querschnittdiagonale mit diesem Farbmischsystem gemischt werden.

Die Grundformen der hierin beschrieben Querschnittsformen der Vorrichtung sind detailliert in den folgenden Veröffentlichungen definiert bzw. basieren die Formen auf den darin enthaltenen Definitionen, wobei die Offenbarung dieser Schriften hiermit als in die vorliegende Beschreibung als mitaufgenommen gilt, dies betrifft folgende Schriften:

[1] Serge Tabachnikov, "Geometrie und Billard", Springer Spektrum (Springer-Verlag Berlin Heidelberg); Edition 1; Auflage: 2013; DOI: 10.1007/978-3-642-31925-9; Kapitel 8, S. 125 ff. - 134.

[2] Bunimovich, L. (1985). "Decay of correlations in dynamical systems with chaotic behavior". Sov. Phys. JETP 62, (S. 842-852).

[3] Sinai, Y. G. (1990). "Hyperbolic Billiards", Proceeding of International Congress of Mathematician (S. 249-260), Kyoto: Math. Soc. Japan, Tokio (1991).

Billardsysteme oder kurz Billards gibt es in unterschiedlichen Klassen. In diesem Dokument werden nach einer allgemeinen Definition mathematischer Billards die für die Patentschrift relevanten Billards beschrieben (d.h. Hyperbolische bzw. chaotische Billards).

Eine Definition für ein mathematisches bzw. dynamisches Billard nach [1] lautet bspw.: "Für ein mathematisches Billard braucht man ein Gebiet G, beispielsweise in der Ebene (den Billardtisch), und einen Massepunkt (die Billardkugel), der sich in diesem Gebiet frei bewegt. Der Massepunkt bewegt sich so lange geradlinig mit konstanter Geschwindigkeit, bis er auf den Rand trifft. Die Reflexion am Rand ist elastisch und unterliegt einem bekannten Gesetz: Der Einfallswinkel ist genauso groß wie der Reflexionswinkel. Nach der Reflexion bewegt sich der Massepunkt mit der neuen Geschwindigkeit weiter frei fort, bis er erneut den Rand trifft; usw."

Eine Definition für ein mathematisches bzw. dynamisches Billard nach [3] lautet bspw.: Billards sind dynamische Systeme, welche der einheitlichen Bewegung eines Massepunkts in einem Gebiet auf einer Riemannschen Mannigfaltigkeit mit elastischer Reflektion an den Grenzflächen entsprechen. Folglich sind Billards geodätische Flüsse auf Mannigfaltigkeiten mit Grenzflächen.

Darüber hinaus werden hyperbolische Billards bzw. chaotische Billards in unterschiedliche Klassen unterteilt, wie bspw. Dispersive Billards und Semi-Dispersive Billards, auch bekannt als Sinai-Billards, sowie Bunimovich-Billards.

Dispersive und Semi-Dispersive Billards werden gemäß [1] folgendermaßen definiert: "Diese Billards sind von stückweise glatten Kurven beschränkt, deren glatte Komponenten streng innen konvex sind und die sich transversal schneiden [...]. Ein paralleles Lichtbündel wird nach der Reflexion an einem konvexen Spiegel gestreut. Deshalb nennt man solche Billards streuend (dispersiv)." und gemäß [3]: "Bei dispersiven Billards sind alle Grenzflächen dispersiv / streuend (" at all regular points of the boundary the geometrical properties of the boundary $K(q) > 0$ "). Bei semi - dispersiven können die Grenzfläche neben dispersiven Elementen auch geradlinige Elemente enthalten ("at all regular points of the boundary the geometrical properties of the boundary $K(q) \geq 0$")".

Bunimovich Billards sind Billards mit nach außen konvexen Randkomponenten (siehe [1]). Die Grenzflächen muss mindestens eine nach außen konvexe Komponente enthalten. Bei Reflektion eines parallelen Strahlbündels an der konvexen Komponente wird das parallele Strahlenbündel konvergent. Wartet man jedoch lange genug wird das konvergente Strahlenbündel defokussiert und wird divergent. Das heißt in der Zeit zwischen zwei aufeinander folgenden Reflektionen muss die Zeit $\tau_c$ in der das Strahlbündel konvergent verläuft kürzer sein als die Zeit $\tau_d$ in der das Strahlenbündel divergent verläuft: $\tau_c < \tau_d$. Dadurch wirkt nach außen konvexe Randkomponente streuend (siehe [2]).

Vorteilhaft können alle Ausführungsformen der hierin beschriebenen und beanspruchten Vorrichtung in Kombination mit einer oder mehreren der hierin genannten und beschriebenen Ausführungsformen realisiert werden.

Weitere Ausführungsformen, deren Ausgestaltung sowie einige der Vorteile, die mit diesen und weiteren Ausführungsformen verbunden sind, werden durch die nachfolgende ausführliche Beschreibung unter Bezug auf die begleitenden Figuren detaillierter und besser verständlich. Die Figuren sind lediglich schematische Darstellungen von Ausführungsformen der Erfindung.

## Figurenbeschreibung

Dabei zeigen

Fig. 1 schematische Querschnittsansichten gemäß verschiedener Ausführungsformen;

Fig. 2 schematische Querschnittsansichten gemäß verschiedener weiterer Ausführungsformen;

Fig. 3 schematische Querschnittsansichten gemäß verschiedener weiterer Ausführungsformen;

Fig. 4 eine schematische Querschnittsansicht gemäß einer weiteren Ausführungsform;

Fig. 5A - 5B schematische Seitenansichten gemäß einer weiteren Ausführungsform der Vorrichtung;

Fig. 6 schematische Seitenansichten gemäß einer weiteren Ausführungsform der Vorrichtung;

Fig. 7 schematische Seitenansichten gemäß einer weiteren Ausführungsform der Vorrichtung;

Fig. 8 schematische Seitenansichten gemäß einer weiteren Ausführungsform; und in

Fig. 9 eine schematische Seitenansichten gemäß einer weiteren Ausführungsform.

## Detaillierte Beschreibung

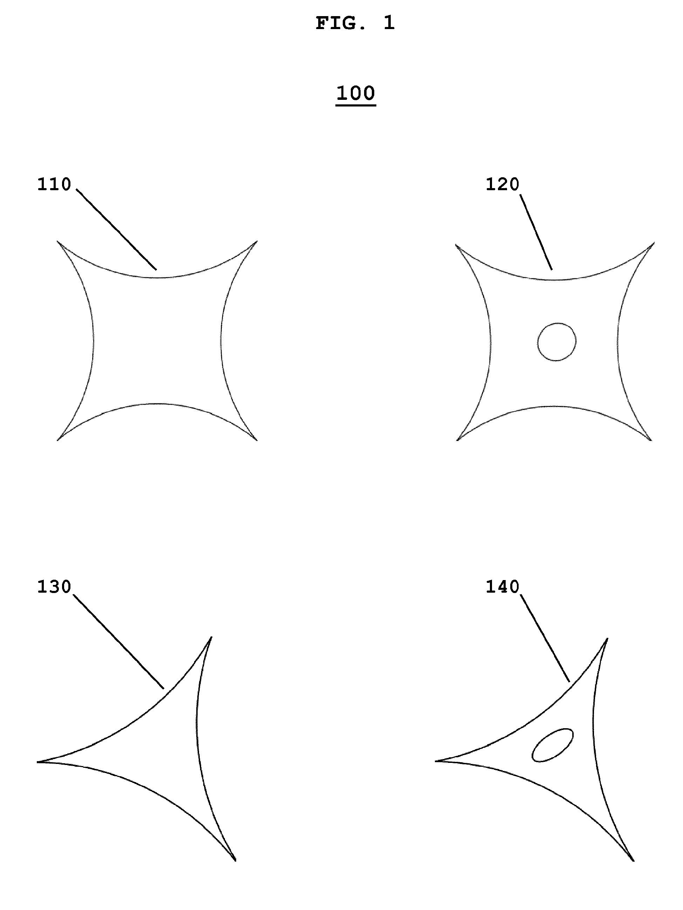

In Fig. 1 sind vier verschiedene exemplarische Ausführungsformen einer beispielhaften Vorrichtung 100 zum Mischen und Leiten von elektromagnetischer Strahlung dargestellt, wobei zumindest aus einem der zuvor genannten Materialien gebildet ist. Gezeigt wird hierbei in Fig. 1 jeweils eine schematische Querschnittsansicht 110-140 durch die jeweilige Vorrichtung. Die in Fig. 1 dargestellten Querschnitte, 110, 120, 130 und 140, basieren dabei auf Grundformen für dispersive Billards, die wiederum eine Unterklasse der Billardsysteme mit hyperbolischer Dynamik bzw. einem chaotischen Billard bilden, wie bereits oben beschrieben ist. Diese dispersiven Billardsysteme basieren auf den Definitionen gemäß [1] und [3].

Die grundlegende Geometrie für den Querschnitt 110 entspricht einem Quadrat, wobei die vier geraden Kanten durch vier Kegelschnitte ersetzt werden, d.h. sie bilden die äußere Umrandung des Querschnitts 110, und wobei die Kegelschnitte konvex sind, d.h. der Mittelpunkt liegt außerhalb der Billardfläche.

Mögliche Kurvenformen für alle folgenden Kegelschnitte in den Querschnitten 110, 120, 130 und 140 sind:

$$\text{Kreis} \qquad (x - x_0)^2 + (y - y_0)^2 = r^2 \qquad (1)$$

$$\text{Ellipse} \qquad \frac{(x - x_0)^2}{a^2} + \frac{(y - y_0)^2}{b^2} = 1 \qquad (2)$$

$$\text{Hyperbel} \qquad \frac{(x - x_0)^2}{a^2} - \frac{(y - y_0)^2}{b^2} = 1 \qquad (3)$$

$$\text{Parabel} \qquad (y - y_0)^2 = 2p\,(x - x_0) \qquad (4)$$

$x_0, y_0$: Mittelpunkt des Kreises
r: Radius des Kreises
$2a$: Hauptachse, Nebenachse (Ellipse) Große oder reelle Achse (Hyperbel)
$2b$: Nebenachse (Ellipse) Kleine oder imaginäre Achse (Hyperbel)
p: Abstand des Brennpunktes von der Leitlinie

Hieraus bestimmen sich die Kantenlängen des Querschnitts, d.h. aufgrund der jeweils verwendeten Kurvenformen. Die geraden Außenflächen werden durch Kegelschnittflächen ersetzt. Der Radius der Kegelschnittflächen wird entsprechend den aufgelisteten Bedingungen gewählt. Die Bedingungen für die Konstruktion der Kegelschnittflächen lauten somit:

- Kegelschnittflächen dürfen sich nicht schneiden;
- Sphärische Form (konische Konstante = 0);
- weiterhin können sie auch:
  - eine parabolische Form (konische Konstante = -1),
  - eine hyperbolische Form (konische Konstante < -1),
  - eine gestreckte Ellipsen (-1 < k < 0) und
  - eine abgeflachte Ellipsen (k > 0)

  aufweisen bzw. demgemäß gebildet sein;
- Je größer der Radius gewählt wird desto schlechter die Farbmischung;
- Die Flächen müssen nach innen gebogen bzw. geformt sein, d.h. konvex.

In einer weiteren Ausführungsform kann auch als grundlegende Form ein Rechteck oder ein Dreieck bereitgestellt sein.

Die grundlegende Geometrie des Querschnitts 120 ist wiederum quadratisch mit vier geraden Kantenflächen, welche wiederum durch Kegelschnitte ersetzt werden, d.h. sie bilden die äußere Umrandung des Querschnitts 120, wobei die Kegelschnitte mindestens einem der zuvor genannten Kegelschnitte entsprechen und wobei hierbei in der Mitte bzw. innerhalb des Körpers der Vorrichtung ein weiterer reflektierender Kegelschnitt angeordnet ist, der bspw. ein Hohlraum ist, so wie bereits zuvor beschrieben, wobei der Kegelschnitt mindestens einem der zuvor genannten Kegelschnitte entspricht.

Die grundlegende Geometrie des Querschnitts 130 basiert auf einem Dreieck mit drei geraden Kantenflächen, welche durch drei Kegelschnitte ersetzt werden, d.h. sie bilden die äußere Umrandung des Querschnitts 130, wobei die Kegelschnitte mindestens einem der zuvor genannten Kegelschnitte entsprechen.

Die grundlegende Geometrie des Querschnitts 140 basiert auf einem Dreieck mit drei geraden Kantenflächen, welche durch drei Kegelschnitte ersetzt werden, d.h. sie bilden die äußere Umrandung des Querschnitts 140, wobei die Kegelschnitte mindestens einem der zuvor genannten Kegelschnitte entsprechen und wobei in der Mitte bzw. innerhalb des Körpers der Vorrichtung ein Kegelschnitt angeordnet ist, wobei der Kegelschnitt mindestens einem der zuvor genannten Kegelschnitte entspricht.

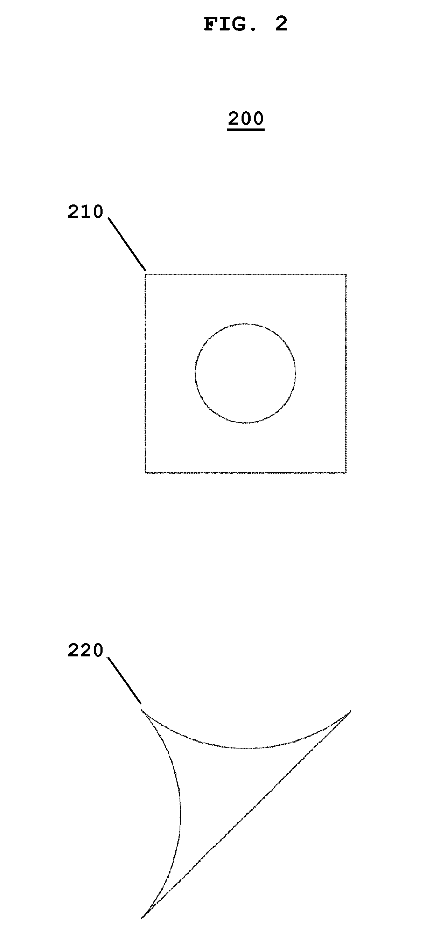

In Fig. 2 sind zwei verschiedene exemplarische Ausführungsformen einer beispielhaften Vorrichtung 200 zum Mischen und Leiten von elektromagnetischer Strahlung dargestellt, wobei diese zumindest aus einem der zuvor genannten Materialien gebildet sind. Gezeigt wird hierbei in Fig. 2 jeweils eine schematische Querschnittsansicht 210 und 220 durch die jeweilige Vorrichtung 200. Die in Fig. 2 dargestellten Querschnitte, 210 und 220, basieren dabei auf Grundformen der semi-dispersiven Billards, so wie bereits zuvor beschrieben, die wiederum eine Unterklasse der Billardsysteme mit hyperbolischer Dynamik bzw. einem chaotischen Billard bilden. Diese semi-dispersiven Billardsysteme basieren auf den Definitionen gemäß [1] und [2].

Die grundlegende Geometrie für den Querschnitt 210 entspricht einem Quadrat einem Quadrat oder Rechteck (gerade Kanten), d.h. sie bilden jeweils die äußere Umrandung des Querschnitts 210, mit einem reflektierenden Kreis oder eine Ellipse in der Mitte bzw. innerhalb des Vorrichtungskörpers. Hierbei mögliche Kurvenformen für diese Kegelschnitte sind:

$$\text{Gerade:} \quad Ax + By + C = 0 \qquad (5)$$

$$\text{Kreis:} \quad (x - x_0)^2 + (y - y_0)^2 = r^2 \qquad (6)$$

$$\text{Ellipse:} \quad \frac{(x-x_0)^2}{a^2}+\frac{(y-y_0)^2}{b^2}=1 \qquad (7)$$

Die Geometrie des Querschnitt 220 basiert auf einem Dreieck, wobei zwei Kanten konvexe Kurvenformen (siehe dispersive Billards weiter oben) und eine Kante eine gerade Kurvenformen aufweisen, d.h. sie bilden dabei gemeinsam die äußere Umrandung des Querschnitts 220. Die beiden konvexen Kurvenformen sind entsprechend mindestens einer Kurvenform gemäß einem der zuvor genannten Kurvenformen der Querschnitte 110-140 gebildet.

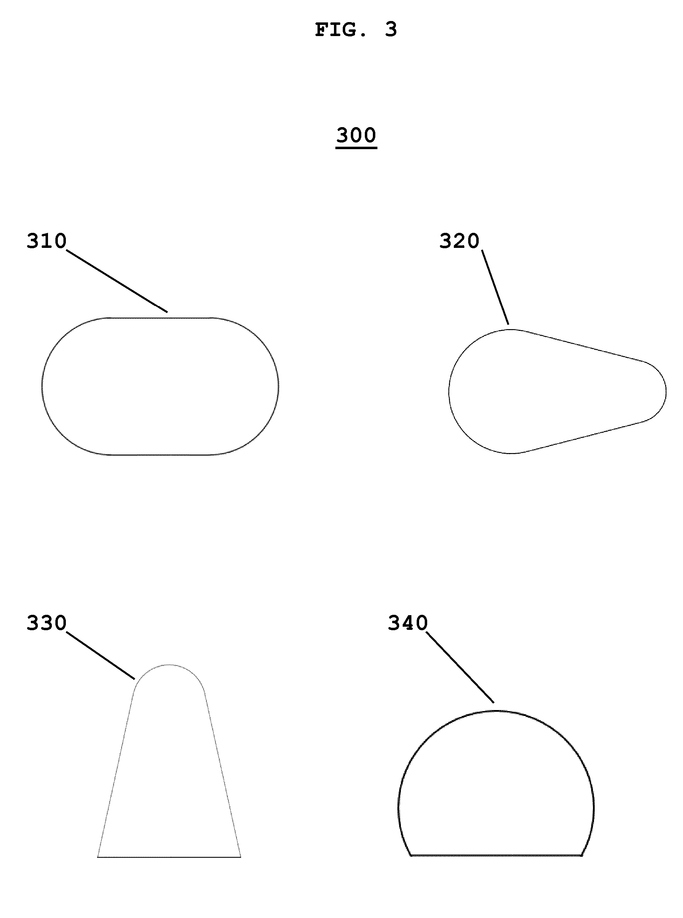

In Fig. 3 sind vier verschiedene exemplarische Ausführungsformen einer beispielhaften Vorrichtung 300 zum Mischen und Leiten von elektromagnetischer Strahlung dargestellt, wobei diese zumindest aus einem der zuvor genannten Materialien gebildet sind. Gezeigt wird hierbei in Fig. 3 jeweils eine schematische Querschnittsansicht durch die jeweilige Vorrichtung 300. Die in Fig. 3 dargestellten Querschnitte 310-340 basieren dabei auf Grundformen der Bunimovich Billards (siehe [1] und [2], so wie bereits zuvor beschrieben, die wiederum eine Unterklasse der Billardsysteme mit hyperbolischer Dynamik bzw. einem chaotischen Billard bilden.

Die Geometrie des Querschnitts 310 basiert auf zwei geraden Kurvenformen und zwei runden Kurvenformen, d.h. sie bilden dabei gemeinsam die äußere Umrandung des Querschnitts 310. Hierbei sind die runden Kurvenformen konkav gebildet, d.h. der Mittelpunkt liegt innerhalb der Billardfläche. Darüber hinaus sind die beiden runden Kurvenformen sowie die beiden geraden Kurvenformen sich jeweils gegenüberliegend angeordnet. Dabei sind die beiden geraden Kurvenformen parallel zueinander angeordnet. Diese Form ist auch unter dem Begriff Bunimovich Stadion bekannt. Die runden Kurvenformen weisen dabei bei diesem Querschnitt 310 und den folgenden Querschnitten 320, 330 und 340 folgende geometrische Formen auf:

$$\text{Gerade:} \quad Ax+By+C=0 \qquad (8)$$

$$\text{Kreis:} \quad (x-x_0)^2+(y-y_0)^2=r^2 \qquad (9)$$

$$\text{Ellipse:} \quad \frac{(x-x_0)^2}{a^2}+\frac{(y-y_0)^2}{b^2}=1 \qquad (10)$$

Die Geometrie des Querschnitts 320 basiert auf zwei geraden Kurvenformen und zwei runden Kurvenformen, d.h. sie bilden dabei gemeinsam die äußere Umrandung des Querschnitts 320. Hierbei sind die runden Kurvenformen konkav gebildet, d.h. der Mittelpunkt liegt innerhalb der Billardfläche. Darüber hinaus sind die beiden runden Kurvenformen sowie die beiden geraden Kurvenformen sich jeweils gegenüberliegend angeordnet. Dabei sind die beiden geraden Kurvenformen konisch zueinander verlaufend angeordnet.

Die Geometrie des Querschnitts 330 basiert auf drei geraden Kurvenformen und einer runden Kurvenformen, d.h. diese vier Kurvenform bilden dabei gemeinsam die äußere Umrandung des Querschnitts 330. Hierbei ist die eine runde Kurvenform konkav gebildet, d.h. der Mittelpunkt liegt innerhalb der Billardfläche. Darüber hinaus sind die zwei der drei geraden Kurvenformen sich jeweils gegenüberliegend angeordnet. Dabei sind diese beiden geraden Kurvenformen konisch zueinander verlaufend angeordnet. Die dritte gerade Kurvenform ist der runden Kurvenform gegenüberliegend angeordnet.

Die Geometrie des Querschnitts 340 basiert auf einer geraden Kurvenform und einer runden Kurvenformen, d.h. diese beiden Kurvenformen bilden dabei gemeinsam die äußere Umrandung des Querschnitts 340. Hierbei ist die eine runde Kurvenform konkav gebildet, d.h. der Mittelpunkt liegt innerhalb der Billardfläche. Dabei weist die runde Kurvenform im Wesentlichen eine Kreisform auf, wobei die gerade Kurvenform und die runde Kurvenform ein Kreissegment bzw. Kreisabschnitt miteinander bilden, wobei bei einem derart gebildeten Kreissegment bzw. Kreisabschnitt der Kreismittelpunkt erhalten bleibt.

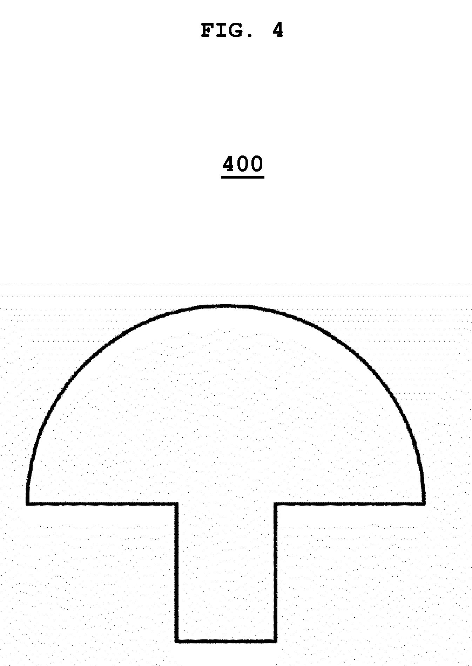

In Fig. 4 ist eine exemplarische Ausführungsform einer beispielhaften Vorrichtung 400 zum Mischen und Leiten von elektromagnetischer Strahlung dargestellt, wobei diese zumindest aus einem der zuvor genannten Materialien gebildet sind. Gezeigt wird hierbei in Fig. 4 eine schematische Querschnittsansicht durch die Vorrichtung 400.

Die Vorrichtung 400 weist einen Querschnitt auf, dessen grundlegende Geometrie ein Kreissegment bzw. Kreisabschnitt und ein Rechteck aufweist, ähnlich einer Pilz-Form. Diese Form ist auch unter dem Namen Pilz-Billard bekannt. Dabei ist die Seite des Rechtecks, bzw. es ist auch ein Quadrat möglich, die an das Kreissegment bzw. Kreisabschnitt angrenzt, zumindest gleich groß oder kleiner als die Kreissehne des Kreissegments bzw. Kreisabschnitts, welche dem Kreisbogen gegenüberliegt, wobei das Rechteck bzw. Quadrat zusammen mit dem Kreissegment bzw.

Kreisabschnitt die äußere Umrandung des Querschnitts der Vorrichtung 400 bilden.

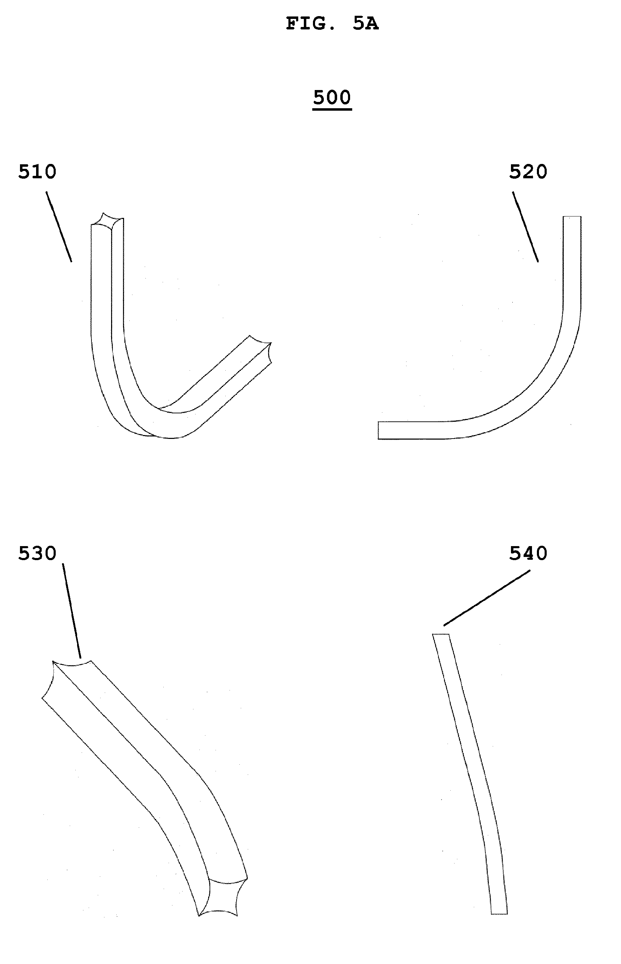

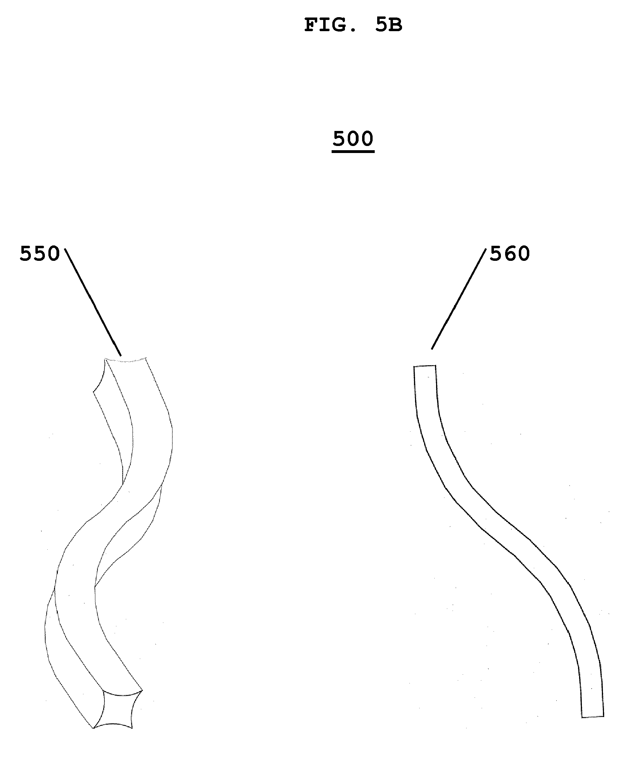

In Fig. 5A und 5B sind verschiedene exemplarische Ausführungsformen einer beispielhaften Vorrichtung 500 zum Mischen und Leiten von elektromagnetischer Strahlung dargestellt, wobei diese zumindest aus einem der zuvor genannten Materialien gebildet sind. Gezeigt wird hierbei in Fig. 5A und 5B jeweils eine schematische schräge und eine schematische direkte bzw. gerade Seitenansicht auf die Vorrichtung 500.

Die Ausführungsformen 510 (schräge Seitenansicht) und 520 (direkte bzw. gerade Seitenansicht) zeigen eine Vorrichtung 500, die eine Krümmung aufweisen, wobei auch mehr als eine Krümmung möglich ist. Diese Krümmung ist hierbei mittig in der Vorrichtung 500 angeordnet, wobei auch eine Krümmung möglich ist die stärker seitlich bzw. zu einer der beiden Seiten hin angeordnet ist, d.h. nicht mittig, angeordnet ist. Die Krümmung ist hierbei rechtwinklig, d.h. 90°, gebildet, wobei auch andere Winkel hierbei möglich sind, d.h. Krümmung die in einem Bereich von größer 0° bis kleiner 180° liegen, bzw. die in einem Bereich von größer 45° bis kleiner 135° liegen.

Die Ausführungsformen 530 (schräge Seitenansicht) und 540 (direkte bzw. gerade Seitenansicht) zeigen eine Vorrichtung 500, die eine Krümmung aufweisen, wobei auch mehr als eine Krümmung möglich ist. Diese Krümmung ist hierbei außermittig in der Vorrichtung 500 angeordnet, wobei auch eine Krümmung möglich ist die mittig angeordnet ist. Die Krümmung ist hierbei in einem Winkel von ungefähr 30°, gebildet, wobei auch andere Winkel hierbei möglich sind, d.h. Krümmung die in einem Bereich von größer 0° bis kleiner 90° liegen, bzw. die in einem Bereich von größer 10° bis kleiner 45° liegen, bzw. die in einem Bereich von größer 30° bis kleiner 60°, bzw. die in einem Bereich von größer 45° bis kleiner 90° liegen.

Die Ausführungsformen 550 (schräge Seitenansicht) und 560 (direkte bzw. gerade Seitenansicht) zeigen eine Vorrichtung 500, die zwei Krümmungen aufweisen, wobei auch mehr als zwei Krümmungen möglich sind. Diese Krümmungen sind nacheinander in der Vorrichtung 500 angeordnet, wobei die mindestens zwei Krümmungen beliebig innerhalb der Vorrichtung 500 angeordnet sein können. Die Krümmungen sind hierbei jeweils in einem Winkel von ungefähr 45°, gebildet, wobei auch jeder andere Winkel hierbei möglich ist, d.h. die Krümmungen können in einem Bereich von größer 0° bis kleiner 90° gebildet sein, bzw. in einem Bereich von größer 10° bis kleiner 80°, bzw. in einem Bereich von größer 20° bis kleiner 70°, bzw. in einem Bereich von größer 30° bis kleiner 60°, bzw. in einem Bereich von größer 40° bis kleiner 50°.

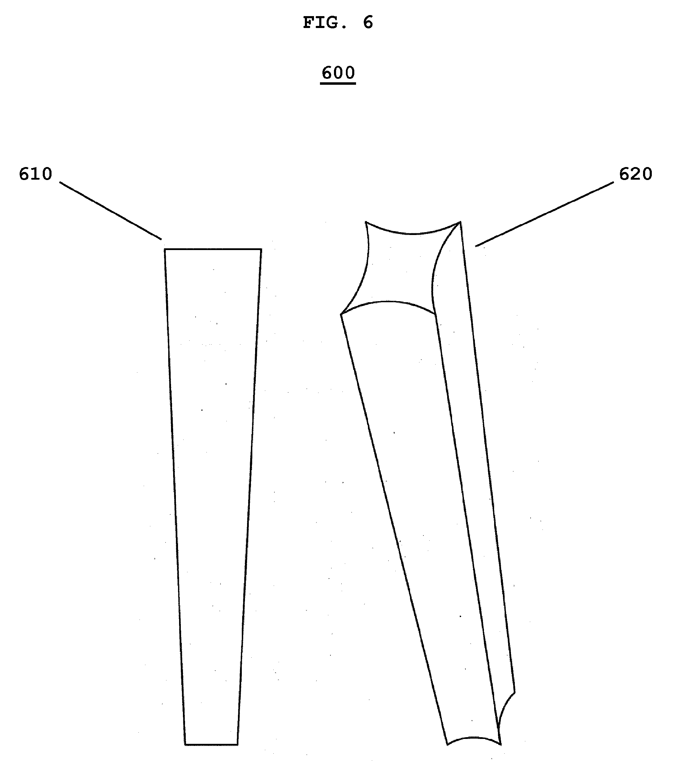

In Fig. 6 sind zwei exemplarische Ausführungsformen einer beispielhaften Vorrichtung 600 zum Mischen und Leiten von elektromagnetischer Strahlung dargestellt, wobei diese zumindest aus einem der zuvor genannten Materialien gebildet sind. Gezeigt wird hierbei in Fig. 6 eine schematische direkte bzw. gerade auf eine Ausführungsform 610 und eine schematische schräge Seitenansicht auf Ausführungsform 620 auf die Vorrichtung 600.

Die Vorrichtung 600 ist wie in den Ausführungsformen 610 und 620 dargestellt konisch entlang der längsten Erstreckung der Vorrichtung 600 gebildet. D.h. da die Vorrichtung 600 stabförmig gebildet ist, weist die Vorrichtung 600 über die gesamte Länge eine konische Form auf, d.h. der Körper der Vorrichtung 600 weist zwischen seinen beiden Enden einen konischen Verlauf auf.

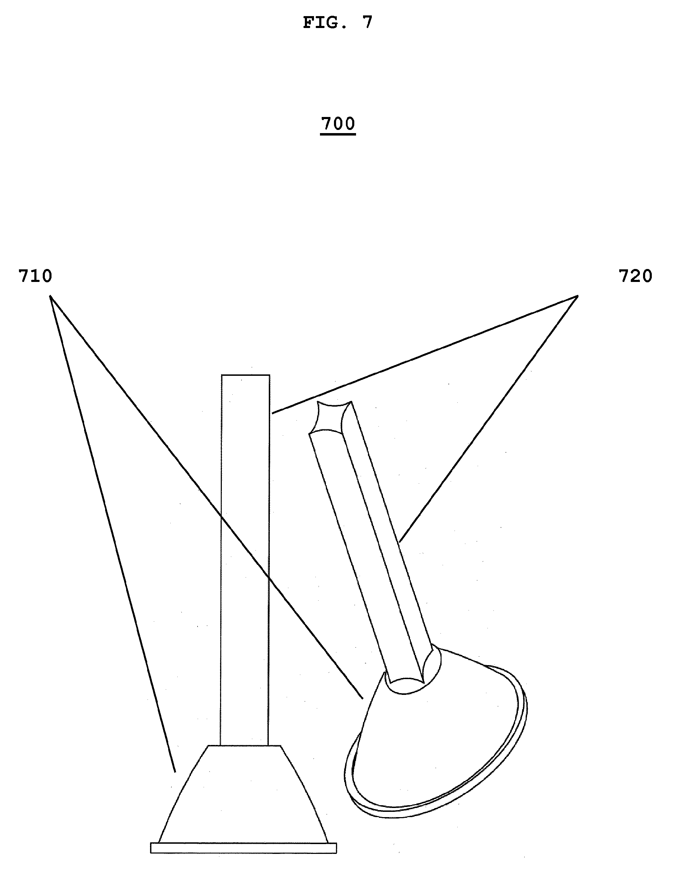

In Fig. 7 sind zwei exemplarische Ausführungsformen einer beispielhaften Vorrichtung 700 zum Mischen und Leiten von elektromagnetischer Strahlung dargestellt, wobei diese zumindest aus einem der zuvor genannten Materialien gebildet sind. Gezeigt wird hierbei in Fig. 7 eine schematische direkte bzw. gerade und eine schematische schräge Seitenansicht auf die Vorrichtung 700.

Die Vorrichtung 700 zeigt eine Anordnung einer Optik 710, die an die Austrittsfläche der Farbmischvorrichtung 720 angrenzend angeordnet ist, bzw. fungiert die Farbmischvorrichtung 720 als Primärlichtquelle an die, angrenzend an deren Austrittsfläche, eine optische Vorrichtung 710 angebracht ist. Die Optik bzw. optische Vorrichtung können dabei bspw. beliebige Linsen bzw. Linsensysteme, z.B. fokussierend oder defokussierend, Reflektoren, Kollimatoren, etc., sein.

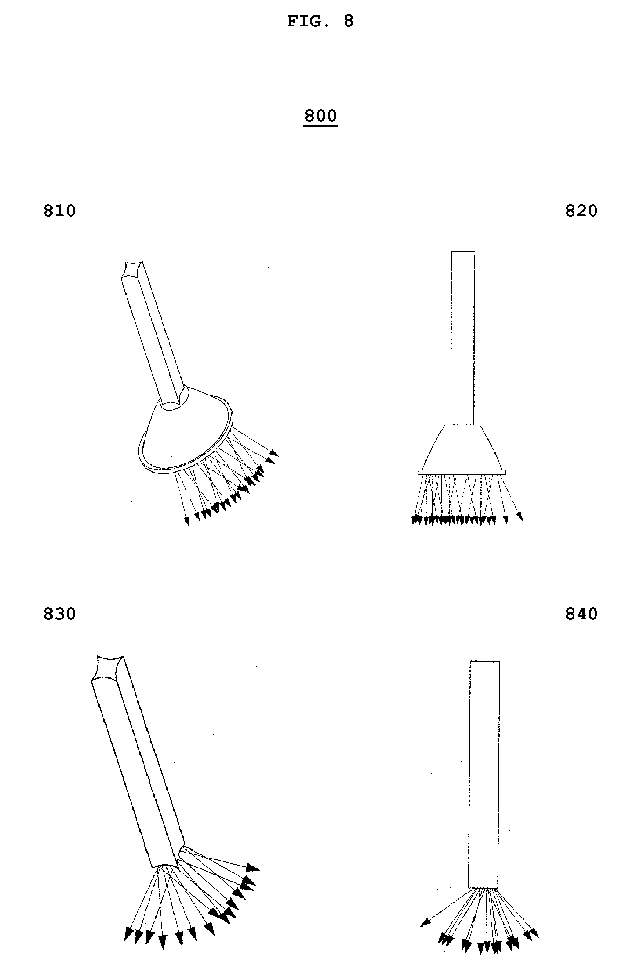

In Fig. 8 sind vier exemplarische Ausführungsformen einer beispielhaften Vorrichtung 800 zum Mischen und Leiten von elektromagnetischer Strahlung dargestellt, wobei diese zumindest aus einem der zuvor genannten Materialien gebildet sind. Gezeigt wird hierbei in Fig. 8 jeweils eine schematische direkte bzw. gerade, 820 und 840, und jeweils eine schematische schräge Seitenansicht, 810 und 830 auf die Vorrichtung 800.

In Fig. 8 ist hierbei exemplarisch dargestellt, dass eine Optik, die angrenzend an die Austrittsfläche der Farbmischvorrichtung angebracht ist, die Lichtstrahlen kollimierter bzw. paralleler nach außen hin abgibt (siehe 810 und 820) verglichen mit der signifikant breiteren Winkelverteilung des abgestrahlten Lichts der Farbmischvorrichtung ohne Optik (siehe 830 und 840).

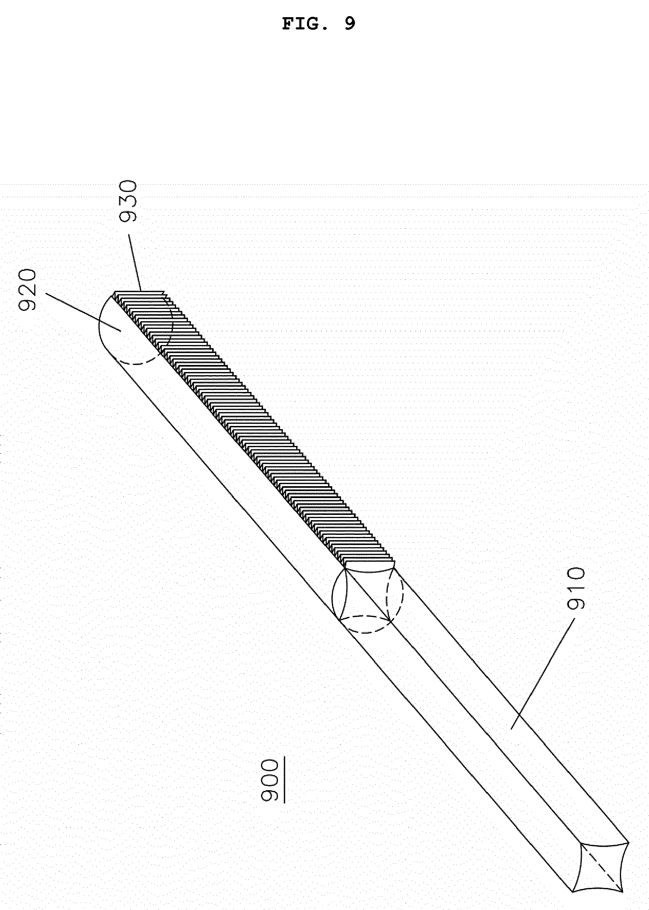

In Fig. 9 ist eine weitere exemplarische Ausführungsform einer beispielhaften Vorrichtung 900 zum Mischen und Leiten von elektromagnetischer Strahlung dargestellt, wobei deren Komponenten zumindest aus einem der zuvor genannten Materialien gemäß zumindest einer der zuvor genannten Ausführungsformen gebildet sind. Gezeigt wird hierbei in Fig. 9 eine schematische schräge Seitenansicht auf die Vorrichtung 900.

In Fig. 9 ist hierbei exemplarisch dargestellt, dass mindestens eine Optik 920, angrenzend an die Austrittsfläche der Farbmischvorrichtung 910 gebildet bzw. vorzugsweise unmittelbar daran angeordnet, die Lichtstrahlen weiterleitet, und mindestens einen Bereich aufweist, der seitlich über der Optik 920 angeordnet ist und mindestens ein optisches Element 930 aufweist, welches zumindest teilweise die Lichtstrahlen nach außen hin abgibt. Das optische Element 930 kann bspw. mittels mindestens einer facettierten Austritts- bzw. Reflexionsfläche gebildet sein, welche bspw. mittels mindestens einer Facette oder mittels mehrerer Facetten gebildet ist.

Die Optik 920 weist zumindest einen der zuvor genannten Querschnitte der oben beschriebenen Ausführungsformen auf. In einer bevorzugten Ausführungsform weist die Optik 920 einen kreisrunden Querschnitt auf, wobei mindestens ein Bereich über der Optik 920 derart gebildet ist, dass darüber das mindestens eine optische Element 930 gebildet oder angeordnet werden kann.

Das optische Element 930, welches die facettierte Austritts- bzw. Reflexionsfläche bildet, weist bspw. eine sägezahnförmige Anordnung auf. Der Querschnitt des optischen Elements 930 ist hierfür jeweils bspw. gemäß einem Dreieck gebildet. Das optische Element 930 fungiert dabei zumindest wie ein optisches Prisma, d.h. es bewirkt eine Umlenkung der auftreffenden Lichtstrahlen oder das darauf auftreffende Licht wird damit nach Wellenlängen aufgefächert.

Die Optik 920, das optische Element 930 und die Austritts- bzw. Reflexionsfläche sind zumindest aus einem zuvor genannten transparenten und/oder transluzenten Material gebildet gemäß zumindest einer zuvor genannten Ausführungsform.

## Patentansprüche

1. Vorrichtung (100, 200, 300, 400, 500, 600, 700) zum Mischen und Leiten von elektromagnetischer Strahlung, gebildet mittels eines geometrischen Körpers, der mittels mindestens einem zumindest teilweise gegenüber einem zuvor definierten Spektralbereich elektromagnetischer Strahlung transparenten und/oder transluzenten Materials gebildet ist, wobei der Körper aufweist:

    • eine Eintrittsfläche und eine Austrittsfläche, die jeweils distal des Körpers angeordnet sind;
    • wobei zumindest die Eintritts- und/oder die Austrittsfläche die Grundfläche des Körpers bildet;
    • mindestens eine, den Körper seitlich zumindest teilweise umlaufende äußere Mantelfläche, wobei die äußere Mantelfläche mindestens zwei Mantelflächensegmente aufweist und wobei sich die äußere Mantelfläche zwischen Eintritts- und Austrittsfläche erstreckt;
    • wobei die Eintritts- und Austrittsfläche, sowie die äußere Mantelfläche den Körper zumindest teilweise umgeben; und
    • wobei ferner die Eintritts- und die Austrittsfläche derart eingerichtet sind, dass

        • mittels der Eintrittsfläche, der zuvor definierte Spektralbereich elektromagnetischer Strahlung, in den Körper eingekoppelt wird;
        • und mittels der Austrittsfläche zumindest ein Teil des zuvor eingekoppelten Spektralbereichs elektromagnetischer Strahlung aus dem Körper austritt;
        • wobei der Körper **dadurch gekennzeichnet ist, dass**
        • mindestens ein Mantelflächensegment zumindest teilweise gekrümmt und semi-dispersiv, dispersiv oder defokussierend gebildet ist; und
        • wobei mindestens ein Querschnitt des Körpers, abseits der Eintritts- und Austrittsfläche, gemäß einer zweidimensionalen Grundflächengeometrie mindestens eines Billardsystems mit hyperbolischer Dynamik gebildet ist.

2. Vorrichtung (100, 200, 300, 400, 500, 600, 700) gemäß Anspruch 1, wobei der Querschnitt des Körpers zumindest eine geometrische Form aus der Gruppe geometrischer Formen von Billardsystemen mit hyperbolischer Dynamik aufweist, wobei die Gruppe aufweist:

    Sinai-, Bunimovich- oder/und Pilz-Billard.

3. Vorrichtung (100, 200, 300, 400, 500, 600, 700) gemäß einem der zuvor genannten Ansprüche, wobei zumindest ein Mantelflächensegment derart gekrümmt und dispersiv gebildet ist, dass das Mantelflächensegment hin zur Körpermitte des Körpers konvex gebildet ist.

4. Vorrichtung (100, 200, 300, 400, 500, 600, 700) gemäß einem der zuvor genannten Ansprüche, wobei alle Mantelflächensegmente derart gekrümmt und dispersiv gebildet sind, dass die Mantelflächensegmente hin zur Körpermitte des Körpers konvex gebildet sind.

5. Vorrichtung (100, 200, 300, 400, 500, 600, 700) gemäß einem der zuvor genannten Ansprüche, wobei zumindest ein Mantelflächensegment derart gekrümmt und semi-dispersiv derart gebildet ist, dass das Mantelflächensegment hin zur Körpermitte des Körpers konvex oder konkav gebildet ist.

6. Vorrichtung (100, 200, 300, 400, 500, 600, 700) gemäß einem der zuvor genannten Ansprüche, wobei zumindest ein Mantelflächensegment derart gekrümmt und defokussierend gebildet ist, dass das Mantelflächensegment hin zur Körpermitte des Körpers konkav und/oder gerade gebildet ist.

7. Vorrichtung (100, 200, 300, 400, 500, 600, 700) gemäß einem der zuvor genannten Ansprüche,

- wobei der gesamte Körper aus mindestens einem optisch transparenten Kunststoff oder Glas gebildet ist; und
- wobei der gesamte Körper aus mindestens einem optisch transparenten oder transluzenten Material aus der Gruppe von optisch transparenten oder transluzenten Materialien gebildet ist, wobei die Gruppe aufweist:

Glas, Polycarbonat (PC),
Polymethacrylmethylimid (PMMI), Silikon und/oder Polymethymethacrylat (PMMA).

8. Vorrichtung (100, 200, 300, 400, 500, 600, 700) gemäß einem der zuvor genannten Ansprüche,

- wobei der Körper zumindest mit mindestens einem Hohlraum innerhalb des Körpers gebildet ist;
- wobei der Hohlraum derart gebildet ist, dass der Körper mindestens eine, den Körper zumindest teilweise innerhalb, umlaufende innere Mantelfläche aufweist;
- wobei die innere Mantelfläche mindestens ein Mantelflächensegment aufweist;
- wobei sich die innere Mantelfläche zumindest teilweise zwischen Eintritts- und Austrittsfläche erstreckt; und
- wobei die innere Mantelfläche derart eingerichtet ist, dass die innere Mantelfläche die, aus dem Körper auftreffende elektromagnetische Strahlung in den Körper zurück reflektiert.

9. Vorrichtung (100, 200, 300, 400, 500, 600, 700) gemäß einem der zuvor genannten Ansprüche, wobei die innere Mantelfläche die Eintritts- und Austrittsfläche berührt.

10. Vorrichtung (100, 200, 300, 400, 500, 600, 700) gemäß Anspruch 8, wobei ein Querschnitt des Hohlraums eine kreisförmige oder elliptische Form aufweist.

11. Vorrichtung (100, 200, 300, 400, 500, 600, 700) gemäß einem der zuvor genannten Ansprüche, wobei der Körper entlang seiner äußeren und/oder inneren Mantelfläche mindestens eine Krümmung aufweist.

12. Vorrichtung (100, 200, 300, 400, 500, 600, 700) gemäß einem der zuvor genannten Ansprüche, wobei angrenzend oder benachbart zur Eintritts- und/oder Austrittsfläche eine Optik angeordnet ist.

13. Vorrichtung (100, 200, 300, 400, 500, 600, 700) gemäß einem der zuvor genannten Ansprüche, wobei die Austrittsfläche derart eingerichtet ist, dass die Vorrichtung als Primärlichtquelle für zusätzliche optische Systeme fungiert.

14. Vorrichtung (100, 200, 300, 400, 500, 600, 700) gemäß einem der zuvor genannten Ansprüche, wobei sich die Flächengröße des Querschnitts entlang des Körpers kontinuierlich oder diskontinuierlich verändert.

15. Verwendung der Vorrichtung gemäß einem der zuvor genannten Ansprüche,

- wobei die Vorrichtung mindestens eine elektromagnetische Strahlung mindestens einer lichtemittierenden oder strahlungsemittierenden Diode (LED) leitet und mischt; und
- wobei die LED mindestens eine aus der Gruppe von LED aufweist, wobei die Gruppe aufweist: UV-LED, IR-LED, organische LED, RGB-LED, alle LED die sichtbares Licht emittieren, LED die blaues Licht emittieren, LED mit Leuchtstoffbeschichtung oder Leuchtstoffummantelung (Packaged LED).

16. Verwendung der Vorrichtung gemäß Anspruch 15,
wobei die Vorrichtung derart eingerichtet ist, dass einzelne LED und/oder Mulitchip-LED eingesetzt sind.

FIG. 1

100

110

120

130

140

FIG. 2

200

210

220

FIG. 3

300

310

320

330

340

FIG. 4

400

FIG. 5A

500
510
520
530
540

FIG. 5B

500

550

560

FIG. 6

600

610

620

FIG. 7

700
710
720

FIG. 8

800

810

820

830

840

FIG. 9

930
920
910
900

Europäisches
Patentamt
European
Patent Office
Office européen
des brevets

# EUROPÄISCHER RECHERCHENBERICHT

Nummer der Anmeldung
EP 16 40 1042

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2011/109908 A1 (SUMIYOSHI YUHEI [JP] ET AL) 12. Mai 2011 (2011-05-12) * Zusammenfassung; Abbildungen 1A, 4F, 5B * * Absatz [0032] * ----- | 1-7,12, 13,15,16 | INV. F21V8/00 |
| X,D | US 2007/024971 A1 (CASSARLY WILLIAM J [US] ET AL) 1. Februar 2007 (2007-02-01) * Zusammenfassung; Abbildungen 3,4,11,14c,15,16b,c,19,22, 34B * ----- | 1-6, 11-16 | |
| X | US 2005/174771 A1 (CONNER ARLIE R [US]) 11. August 2005 (2005-08-11) * Zusammenfassung; Abbildungen 7,5 * * Absatz [0058] * ----- | 1-7, 12-16 | |
| X | US 2014/328067 A1 (CHU SHIN-HUA [TW] ET AL) 6. November 2014 (2014-11-06) * Abbildung 10a * ----- | 1,5, 8-10,15, 16 | |
| | | | RECHERCHIERTE SACHGEBIETE (IPC) |
| X | US 2008/089654 A1 (LEE SANG HOON [KR] ET AL) 17. April 2008 (2008-04-17) * Zusammenfassung; Abbildung 10 * ----- | 1-6,8-10 | G02B |
| X | US 2012/014127 A1 (KANADE UDAYAN [IN] ET AL) 19. Januar 2012 (2012-01-19) * Zusammenfassung; Abbildungen 40-49 * ----- | 1-6,12, 13,15,16 | |
| X | WO 2012/032564 A1 (FUKUVI CHEM IND CO [JP]; HAYASHIDA KYOJI [JP]; KOBAYASHI TOSHIYUKI [JP) 15. März 2012 (2012-03-15) * Abbildungen 3-5 * ----- | 1-6,11 | |
| X | JP 2004 311162 A (STANLEY ELECTRIC CO LTD) 4. November 2004 (2004-11-04) * Zusammenfassung; Abbildungen 3,4 * ----- -/-- | 1-10, 12-16 | |

Der vorliegende Recherchenbericht wurde für alle Patentansprüche erstellt

3

| Recherchenort | Abschlußdatum der Recherche | Prüfer |
|---|---|---|
| München | 5. Dezember 2016 | Elflein, Wilhelm |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

Europäisches
Patentamt
European
Patent Office
Office européen
des brevets

# EUROPÄISCHER RECHERCHENBERICHT

Nummer der Anmeldung
EP 16 40 1042

| EINSCHLÄGIGE DOKUMENTE | | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (IPC) |
| X | US 5 109 465 A (KLOPOTEK PETER J [US]) 28. April 1992 (1992-04-28) * Zusammenfassung; Abbildung 3 * ----- | 1-9 | |
| | | | RECHERCHIERTE SACHGEBIETE (IPC) |

Der vorliegende Recherchenbericht wurde für alle Patentansprüche erstellt

| Recherchenort | Abschlußdatum der Recherche | Prüfer |
|---|---|---|
| München | 5. Dezember 2016 | Elflein, Wilhelm |

3

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR.

EP 16 40 1042

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

05-12-2016

| Im Recherchenbericht angeführtes Patentdokument | Datum der Veröffentlichung | Mitglied(er) der Patentfamilie | Datum der Veröffentlichung |
|---|---|---|---|
| US 2011109908 A1 | 12-05-2011 | EP 2345888 A1 | 20-07-2011 |
| | | JP 5424826 B2 | 26-02-2014 |
| | | JP 2011106836 A | 02-06-2011 |
| | | US 2011109908 A1 | 12-05-2011 |
| US 2007024971 A1 | 01-02-2007 | EP 1920289 A2 | 14-05-2008 |
| | | US 2007024971 A1 | 01-02-2007 |
| | | US 2011058388 A1 | 10-03-2011 |
| | | WO 2007016282 A2 | 08-02-2007 |
| US 2005174771 A1 | 11-08-2005 | CN 1918498 A | 21-02-2007 |
| | | EP 1714176 A2 | 25-10-2006 |
| | | JP 2007522674 A | 09-08-2007 |
| | | TW I361295 B | 01-04-2012 |
| | | US 2005174771 A1 | 11-08-2005 |
| | | WO 2005078496 A2 | 25-08-2005 |
| US 2014328067 A1 | 06-11-2014 | CN 103278879 A | 04-09-2013 |
| | | CN 105180096 A | 23-12-2015 |
| | | EP 2799924 A2 | 05-11-2014 |
| | | TW 201443371 A | 16-11-2014 |
| | | US 2014328067 A1 | 06-11-2014 |
| US 2008089654 A1 | 17-04-2008 | KEINE | |
| US 2012014127 A1 | 19-01-2012 | CN 102439357 A | 02-05-2012 |
| | | US 2012014127 A1 | 19-01-2012 |
| | | WO 2010111310 A2 | 30-09-2010 |
| WO 2012032564 A1 | 15-03-2012 | JP 5527862 B2 | 25-06-2014 |
| | | WO 2012032564 A1 | 15-03-2012 |
| JP 2004311162 A | 04-11-2004 | KEINE | |
| US 5109465 A | 28-04-1992 | KEINE | |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 2013114259 A1
- US 20070024971 A1
- DE 102011086915 A1
- DE 102013212906 A1
- EP 2039987 B1
- WO 2012176117 A1


### In der Beschreibung aufgeführte Nicht-Patentliteratur


- **DELLER, C. ; SMITH, G. ; FRANKLIN, J.** Colour mixing LEDs with short microsphere doped acrylic rods. *Opt. Express,* 2004, vol. 12
- **CASSARLY, W. J.** Recent Advances in Mixing Rods. *Proc. of SPIE Vol. 7103, Illumination Optics,* 2008
- **SERGE TABACHNIKOV.** Geometrie und Billard. Springer Spektrum (Springer-Verlag Berlin Heidelberg), 2013, 127 FF, , 134
- **BUNIMOVICH, L.** Decay of correlations in dynamical systems with chaotic behavior. *Sov. Phys. JETP,* 1985, vol. 62, 842-852
- Hyperbolic Billiards. **SINAI, Y. G.** Proceeding of International Congress of Mathematician. Kyoto: Math. Soc. Japan, 1990, 249-260